# EUROPEAN PATENT SPECIFICATION

(11) **EP 4 001 723 B1**
(45) Date of publication and mention of the grant of the patent: **08.01.2025**
(21) Application number: 21383021.9
(22) Date of filing: 11.11.2021
(51) Int. Cl.: F16L 17/04

(54) **SEALING COUPLING FOR CONNECTING DISTRIBUTION DUCTS**
ABDICHTENDE VERBINDUNG FÜR VERTEILUNGSLEITUNGEN
RACCORD D'ÉTANCHÉITÉ POUR RACCORDER DES CONDUITS DE DISTRIBUTION

(30) Priority: 12.11.2020 ES 202032438 U
(43) Date of publication of application: 25.05.2022
(73) Proprietor: UNIONES ARPOL S.A., 08338 Premià de Dalt Barcelona (ES)
(72) Inventor: PIRES CABADO, Barbara Ines, 08319 Dosrius (Barcelona) (ES); PIRES CABADO, Elisabet Patricia, 08348 Cabrils (Barcelona) (ES)
(74) Representative: Espiell Volart, Eduardo Maria

(56) References cited:
- FR-A- 1 028 176
- GB-A- 2 389 395
- US-A- 4 108 479

## Description

### OBJECT OF THE INVENTION

The invention, as stated in the title of this specification, refers to a sealing coupling for distribution ducts having a flexible closure assembly that contributes, to the function to which it is designed, with advantages and characteristics that will be disclosed in detail thereafter and that mean a novelty to the current state-of-art.

The object of this invention refers to a sealing coupling used to join by their ends two lengths of pipe of distribution duct of a fluid installation normally water, which is essentially distinguished in that it comprises a closure assembly comprising circumferential means for compensation of the "torque" that the pressure of the fluid can cause on the screw joining the respective members of each end of the external body of the connection or flange that its closure possesses, providing an elastic closure system that avoids an excessive and unrecoverable deformation of the closure and, consequently, favors an optimum operation of the coupling or flange device.

### FIELD OF APPLICATION OF THE INVENTION

The field of application of this invention is within the sector of the industry engaged in the production of tubing or pipes sealing and fixation apparatuses and devices.

### BACKGROUND OF THE INVENTION

in the installations of fluid distribution ducts, for example water, formed by connecting lengths of ducts, coupling elements are usually used that, basically, comprise an internal sealing gasket, formed by a circular band of soft material, an intermediate coupling body constituted by an open rim, that is fitted on the internal gasket and is that is somewhat wider that this later, and an external coupling body formed by another open rim, that is fixed, by screwing, on the intermediate body, avoiding that its opening coincides with its, and the ends of which possess a closure, that is the part of the junction that provides the assembly with immobility and, consequently, the tightness between the lengths of the duct it encompasses, in which the existence of respective protruding members are provided, one at each end of the external body, which are provided with a series of through holes arranged so that they are facing each other, those of one member and the other member and between which, at least, a locking screw is inserted, and in addition it is foreseen to include a transversa shaft joining the locking screws at each of the two members

The problem with this type of closure, is that it can be submitted to a great pressure of the internal fluid, which provokes the seal outwards push, and the fact is that, eventually, because of the said pressure, a given "torque" or turn of the sealing screw or screws can occur due to a given deviation of the position between one and the other member of the external body of the closure element in which the said screw or screws are tightened, which, in turn, can produce a defect in the coupling occurs and, consequently , an eventual loss of tightness.

Document FR1028176A discloses a removable connection sleeve for connecting end to end in a leaktight and removable manner two pipe elements

Document US4108479A discloses a pipe coupling comprising a housing which can be clamped about pipe ends which are to be interconnected.

Document GB2389395A discloses a pipe coupling for connecting together the ends of two pipes comprises a tubular casing, a tubular sealing sleeve positioned inside the casing and tensioning means for tightening the casing around the tubular sleeve.

The objective of this invention is, therefore, to develop an improved type of closure for this type of coupling elements in which the described problem is avoided by including compensation means of the said eventual deviation to provide the recovery of the position of the sealing screw when the fluid pressure is no longer pushing the seal.

On the other hand, and as reference to the current state-of-the-art, it shall be pointed out that, at least this applicant is not aware of the existence of any other flexible closure assembly for distribution ducts seals, nor of any other invention having a similar application, that possesses technical and structural characteristics equal or similar to those appearing in what is claimed herein.

### EXPLANATION OF THE INVENTION

The invention is defined in the appended claims.

The flexible closure assembly for sealing distribution ducts that the invention proposes is configured as the suitable solution to the above-mentioned objective, the characterizing details making it possible and distinguishing it conveniently appearing in the final claims attached to this specification.

Concretely, what the invention proposes, as it was said before, is a closure element integrated in a sealing coupling that serves to couple, by their ends two lengths of distribution duct of a fluid installation, normally water, where the pressure that the fluid can exert towards the walls of the pipes and consequently, towards the said coupling and, therefore, on the closure can provoke deformations in it, is essentially distinguished in that it includes circumferential compensation means of the torque that the said pressure can provoke on the coupling screw or screws with which the respective flanges of each end of the tightening collar of the coupling are fixed to each other that, conventionally, the said seal thereof comprises, providing an elastic closure assembly that, by compensation of the said torque prevents an excessive or irrecoverable deformation of the closure and consequently, an eventual impairment of the functionality of the sealing coupling, favoring therefore an optimum operation thereof.

For this and more concretely, the said circumferential compensation means are determined by the existence of one or more additional screws that, inserted through additional holes expressly pierced in an additional portion of the said members forming the closure assembly in which the locking screw or screws are incorporated, compensate the deviation that these later can have as the said additional compensation screws are located above and externally to the closure screws, that means, furthest from the center of the circumference that the different layers the sealing coupling comprises define.

in addition, it is important to point out that the described circumferential compensation means likewise comprise the incorporation in each of the protruding members an additional transversal joining shaft that is inserted in elastic rings, providing the possibility of movement and recovery of the closure original position when it seems deformed.

### DESCRIPTION OF THE DRAWINGS

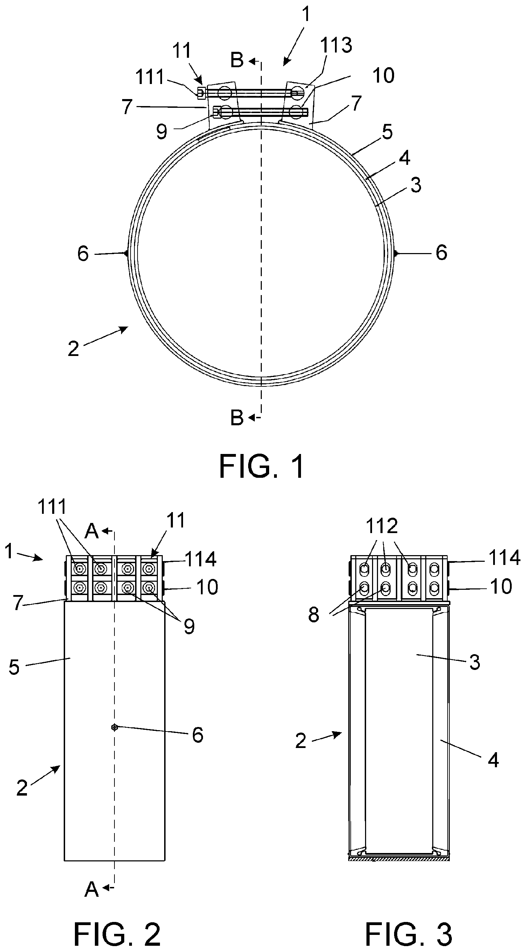

To complement the description carried out and in order to assist to best understand the characteristics of the invention, attached to this specification, as an integral part thereof, a drawing in which for illustration and no limitation purpose, the following has been represented:
The figures number 1.- it shows a schematic cross view, according to a cross section, marked as AA section in the figure 2, of an example of embodiment of a sealing coupling or flange for distribution ducts that possesses the flexible closure assembly object of the invention, the parts and elements it comprises can be seen as well as their configuration and arrangement;
The figure number 2.- it shows a schematic side elevation view of the sealing coupling and its closure, according to the invention, appearing in the figure 1; and
The figure 3.- it newly shows a schematic cross section of the sealing coupling with elastic closure, according to the invention, appearing in the preceding figures, in this case according to the B-B longitudinal section appearing in the figure 1.

### PREFERRED EMBODIMENT OF THE INVENTION

Seen the said figures and according to the numerals adopted, a no limiting example of embodiment can be seen of the sealing coupling for sealing distribution ducts of the invention which comprises what is described in details below.

Thus, as it can be seen in the said figures, a flexible closure assembly (1) forms an integral part of a sealing coupling (2) designed to join, by their ends, distribution duct pipes of a fluid installation, normally water, of the type that comprises, preferably, an internal gasket (3), formed by a circular band of soft material, an intermediate coupling body (4) formed by an open rim, that is fitted on the internal gasket (3) and that is somewhat wider that this later, and anyway, at least an external tightening collar (5) formed by another open rim that is fixed, by lateral screws (6) on the intermediate body (4) and the ends of which define the closure assembly (1) that provides, in the position of use, the immobility of the assembly on the pipes to be sealed, which in turn, in a well-known manner, comprises respective protruding members (7) joined jointly and respectively to each of the ends of the external body (5) of the coupling (2), that are provided with one or several main through holes (8), arranged so that they are facing each those of the other member (7) and between which at least one sealing screw (9) and a transversal joining shaft (10) are inserted in each member.

From this already known configuration, the said flexible closure assembly (1) of the invention is distinguished by the fact it comprises, in addition, circumferential compensation means (11) that compensate the closure (1) deformation that can be provoked by the eventual turn of the locking screw or screws (8) caused by the fluid pressure within the coupling (2).

Preferably, the said circumferential compensation means (11) are determined by the existence of one or more additional screws (111) that are incorporated inserted through one or more additional holes (112) pierced to that effect in an additional portion of the upper part of each of the two protruding members (7) of the closure (1), so that they remain located on the sealing screw or screws (9) and externally thereof, that means, furthest from the center of the circumference the different layers the sealing coupling (2) comprises define.

in addition, it is important to point out that the described circumferential compensation means (11) comprise likewise, the incorporation in each of the protruding members (7) an additional cross fixation axis (113) inserted in elastic rings (114), providing the possibility of movement and recovery of the seal original position when deformed

Sufficiently disclosed the nature of this invention, as well as the manner of implementing it, it is not deemed necessary to extend anymore its explanation in order that any man skilled in the art understands its scope and the advantages arising from it.

## Claims

1. Sealing coupling (2) for distribution ducts, designed to join, by their ends, distribution duct pipes of a fluid installation, comprising a tightening collar (5) formed by an open rim having ends defining a closure assembly (1) that, in a position of use, immobilizes the pipes to be sealed,
where said closure assembly (1) comprises respective protruding flanges (7) joined respectively to either end of the tightening collar (5) of the coupling (2), each of said protruding flanges (7) being provided with one or more main through holes (8) which, in the position of use, face corresponding main through holes (8) of the other protruding flange (7), where at least one sealing screw (9) and a transversal joining shaft (10) are, in the position of use, inserted between said protruding flanges (7),
**characterized in that** the closure assembly (1) further comprises circumferential compensation means (11) comprising one or more additional screws (111) which, in the position of use, are inserted through one or more additional holes (112) provided in an additional portion of each of the protruding flanges (7), so that said additional screws (111) are provided in a circumferentially external position with respect to the sealing screws (9),

2. Sealing coupling (2) for distribution ducts according to claim 1, wherein the circumferential compensation means (11) further comprise, in each of the protruding flanges (7), an additional transversal joining shaft (113) which, in the position of use, is inserted in elastic rings (114).

## Patentansprüche

1. Abdichtende Verbindung (2) für Verteilungsleitungen, die dazu ausgelegt ist, an ihren Enden Rohre von Verteilungsleitungen einer Fluidanlage zu verbinden, umfassend einen Spannkragen (5), der durch einen offenen Rand ausgebildet ist, der Enden aufweist, die eine Verschlussbaugruppe (1) definieren, die in einer Gebrauchslage die abzudichtenden Rohre unbeweglich macht,
wobei die Verschlussbaugruppe (1) jeweilige vorstehende Flansche (7) umfasst, die jeweils mit beiden Enden des Spannkragens (5) der Verbindung (2) verbunden sind, wobei jeder der vorstehenden Flansche (7) mit einem oder mehreren Hauptdurchgangslöchern (8) versehen ist, die in der Gebrauchslage entsprechenden Hauptdurchgangslöchern (8) des anderen vorstehenden Flansches (7) gegenüberliegen, wobei mindestens eine Dichtungsschraube (9) und eine Querverbindungswelle (10) in der Gebrauchslage zwischen den vorstehenden Flanschen (7) eingesetzt sind,
**dadurch gekennzeichnet, dass** die Verschlussbaugruppe (1) ferner Umfangs-Ausgleichsmittel (11) umfasst, die eine oder mehrere zusätzliche Schrauben (111) umfassen, die in der Gebrauchslage durch ein oder mehrere zusätzliche Löcher (112) eingeführt werden, die in einem zusätzlichen Abschnitt jedes der vorstehenden Flansche (7) vorgesehen sind, sodass die zusätzlichen Schrauben (111) in einer in Umfangsrichtung äußeren Position in Bezug auf die Dichtungsschrauben (9) vorgesehen sind.

2. Abdichtende Verbindung (2) für Verteilungsleitungen nach Anspruch 1, wobei die Umfangs-Ausgleichsmittel (11) ferner in jedem der vorstehenden Flansche (7) eine zusätzliche Querverbindungswelle (113) umfassen, die in der Gebrauchslage in elastische Ringe (114) eingesetzt ist.

## Revendications

1. Raccord d'étanchéité (2) pour conduits de distribution, conçu pour assembler, par leurs extrémités, des tuyaux de conduit de distribution d'une installation de fluides, comprenant un collier de serrage (5) formé par un rebord ouvert ayant des extrémités définissant un ensemble fermeture (1) qui, dans une position d'utilisation, immobilise les tuyaux à étanchéifier,
où l'ensemble fermeture (1) comprend des brides saillantes (7) respectives assemblées respectivement à l'une et l'autre extrémité du collier de serrage (5) de l'accouplement (2), chacune desdites brides saillantes (7) étant pourvue d'un ou de plusieurs trous de passage principaux (8) qui, dans la position d'utilisation, font face aux trous de passage principaux correspondants (8) de l'autre bride saillante (7), où au moins une vis d'étanchéité (9) et un arbre d'assemblage transversal (10) sont, dans la position d'utilisation, insérés entre lesdites brides saillantes (7),
**caractérisé en ce que** l'ensemble fermeture (1) comprend en outre des moyens de compensation circonférentielle (11) comprenant une ou plusieurs vis (111) supplémentaires qui, dans la position d'utilisation, sont insérées à travers un ou plusieurs trous supplémentaires (112) pourvus dans une partie supplémentaire de chacune des brides saillantes (7), de sorte que lesdites vis supplémentaires (111) sont pourvues dans une position circonférentiellement externe par rapport aux vis d'étanchéité (9).

2. Raccord d'étanchéité (2) pour conduits de distribution selon la revendication 1, dans lequel les moyens de compensation circonférentielle (11) comprennent en outre, dans chacune des brides saillantes (7), un arbre d'assemblage transversal (113) supplémentaire qui, dans la position d'utilisation, est inséré dans des anneaux élastiques (114).
